Europäisches Patentamt

European Patent Office

Office européen des brevets

(19)

(11) **EP 0 627 077 B1**

(12) **EUROPÄISCHE PATENTSCHRIFT**

(45) Veröffentlichungstag und Bekanntmachung des Hinweises auf die Patenterteilung:
**06.08.1997 Patentblatt 1997/32**

(21) Anmeldenummer: **94900749.6**

(22) Anmeldetag: **03.12.1993**

(51) Int Cl.[6]: **G01N 27/12**

(86) Internationale Anmeldenummer:
**PCT/DE93/01152**

(87) Internationale Veröffentlichungsnummer:
**WO 94/15203 (07.07.1994 Gazette 1994/15)**

(54) **SENSORANORDNUNG ZUR BESTIMMUNG VON GASKOMPONENTEN UND/ODER GASKONZENTRATIONEN VON GASGEMISCHEN**

SENSOR FOR THE DETERMINATION OF GAS COMPONENTS AND/OR GAS CONCENTRATIONS OF GAS MIXTURES

DETECTEUR PERMETTANT DE DETERMINER DES COMPOSANTS GAZEUX ET/OU DES CONCENTRATIONS DE GAZ DE MELANGES GAZEUX

(84) Benannte Vertragsstaaten:
**CH DE ES FR GB LI SE**

(30) Priorität: **23.12.1992 DE 4243732**

(43) Veröffentlichungstag der Anmeldung:
**07.12.1994 Patentblatt 1994/49**

(73) Patentinhaber: **ROBERT BOSCH GMBH
70442 Stuttgart (DE)**

(72) Erfinder: **RIEGEL, Johann
D-74321 Bietigheim-Bissingen (DE)**

(74) Vertreter: **Röser, Peter, Dipl.-Ing.
c/o Robert Bosch GmbH
Postfach 30 02 20
70442 Stuttgart (DE)**

(56) Entgegenhaltungen:
WO-A-90/10862        DE-A- 2 603 785
DE-A- 3 315 654       FR-A- 2 284 880
GB-A- 2 004 068

• **DATABASE WPI Week 9116, Derwent Publications Ltd., London, GB; AN 91-115079 & JP,B,3 022 584 (TOSHIBA KK) 27. März 1991**

## Beschreibung

Stand der Technik

Die Erfindung geht aus von einer Sensoranordnung zur Bestimmung von Gaskomponenten und/oder Gaskonzentrationen von Gasgemischen nach der Gattung des Hauptanspruchs.

Sensoren zur Bestimmung des Gehalts an Kohlenmonoxid in Gasgemischen auf der Basis von halbleitenden Metalloxiden, die bei hohen Temperaturen in Abhängigkeit vom Gehalt an Kohlenmonoxid, aber auch vom Sauerstoffgehalt, ihre elektrische Leitfähigkeit ändern, sind bekannt (DE-PS 26 03 785). Als Metalloxid wird beispielsweise Zinnoxid eingesetzt, das bei höheren Temperaturen Sauerstoff an der Oberfläche adsorbiert und negativ ionisiert. Als Ergebnis bildet sich an den Korngrenzen des Zinnoxids eine Potentialschwelle aus, die mit steigender Konzentration des in Ionenform adsorbierten Sauerstoffs wächst. Kommt nun die mit Sauerstoff belegte Zinnoxid-Oberfläche in Kontakt mit oxidierbaren Gasen, wie beispielsweise CO, so werden diese vom adsorbierten Sauerstoff oxidiert. Dabei wird die negative Ladung an der Grenzfläche und damit die Potentialschwelle abgesenkt. Die Oberflächenleitfähigkeit des Metalloxids steigt somit wieder an. Will man die Leitfähigkeitsänderung zur Konzentrationsmessung von oxidierbaren Gaskomponenten, wie zum Beispiel CO, $NO_x$ und HC heranziehen, ergibt sich somit eine Sauerstoffquerempfindlichkeit. Außerdem kommt es bei niedrigen Sauerstoffpartialdrücken und besonders auch in Verbindung mit hohen Temperaturen zu einer irreversiblen Reduktion des halbleitenden Metalloxids und damit zum Ausfall des Sensors. Nachfolgend werden die zu bestimmenden Gaskomponenten als Schadstoffkomponenten bezeichnet.

Vorteile der Erfindung

Der Erfindung liegt die Erkenntnis zugrunde, daß bei einer Überbelegung der Kornflächen des halbleitenden Metalloxids mit Sauerstoff selbst hohe Sauerstoffkonzentrationsänderungen vernachlässigbar wenig Einfluß auf den sensitiven Bereich des Meßelements haben.

Die erfindungsgemäße Sensoranordnung mit den kennzeichnenden Merkmalen des Hauptanspruchs hat den Vorteil, daß mit einfachen Mitteln die Querempfindlichkeit des Meßelements gegenüber Sauerstoff weitgehend eliminiert wird. Die Sensoranordnung ist aufgrund der Einfachheit kostengünstig herstellbar. Außerdem ist keine Sauerstoffpumpzelle notwendig, die Sauerstoff zum Meßelement pumpt.

Durch die in den Unteransprüchen aufgeführten Maßnahmen sind vorteilhafte Weiterbildungen und Verbesserungen der im Hauptanspruch angegebenen Sensoranordnung möglich. Besonders vorteilhaft ist es, durch das Einbringen von Diffusionsbarrieren einen ausreichend entgegengesetzt gerichteten Konzentrationsgradient von Schadstoffkomponente und Sauerstoff einzustellen. Befindet sich infolge der Abgase anderer Kraftfahrzeuge in der als Referenzgas eingesetzten Außenluft eine hohe CO-Konzentration, wird durch die Verwendung eines Oxidationskatalysators das CO mit dem im Überschuß vorhandenen Luftsauerstoff oxidiert. Die CO-Konzentration wird dadurch referenzgasseitig auf vernachlässigbare Werte vermindert, wogegen die $O_2$-Konzentration in erster Näherung konstant bleibt.

Zeichnung

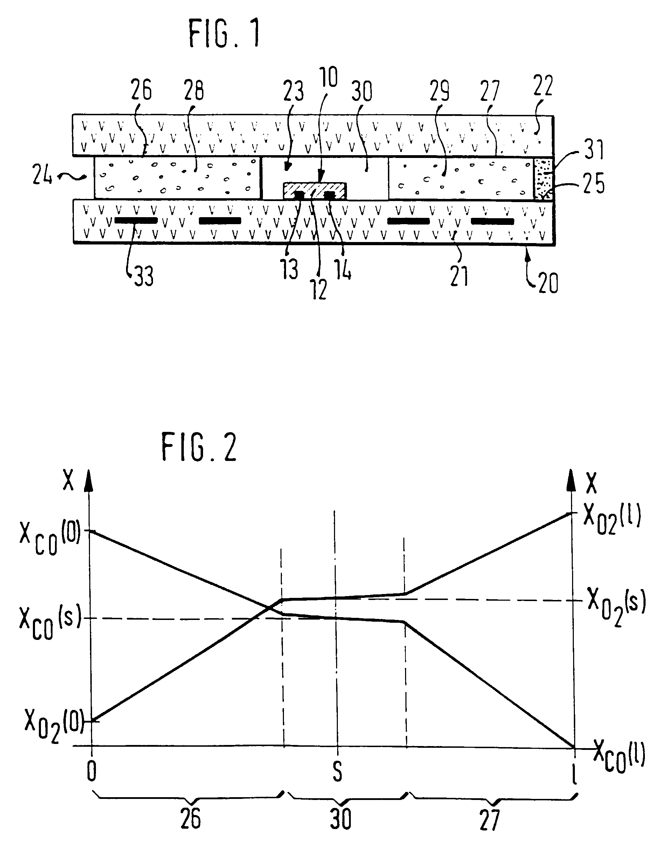

Ein Ausführungsbeispiel ist in der Erfindung dargestellt und in der nachfolgenden Beschreibung näher erläutert. Es zeigen Figur 1 eine Schnittdarstellung der erfindungsgemäßen Sensoranordnung und Figur 2 den Verlauf der Sauerstoff- und der CO-Konzentration über die Länge des Diffusionskanals gemäß Figur 1.

Ausführungsbeispiel

Gemäß Figur 1 besteht die Sensoranordnung aus einem Keramikträger 20 aus beispielsweise $Al_2O_3$ mit einem unteren Keramikträgerteil 21 und einem oberen Keramikträgerteil 22. Zwischen den Keramikträgerteilen 21, 22 befindet sich ein Diffusionskanal 23 mit einer abgasseitigen Öffnung 24 und einer referenzgasseitigen Öffnung 25. Zur abgasseitigen Öffnung 24 hin bildet sich eine abgasseitige Diffusionsstrecke 26 und zur referenzgasseitigen Öffnung 25 hin eine referenzgasseitige Diffusionsstrecke 27 aus. In die abgasseitige Diffusionsstrecke 26 ist ein poröser abgasseitiger Diffusionskörper 28 und in die referenzgasseitige Diffusionsstrecke 27 ein poröser referenzgasseitiger Diffusionskörper 29 eingesetzt. Zwischen den beiden Diffusionskörpern 28, 29 befindet sich eine Meßkammer 30. Der Diffusionskanal 23 verbindet somit das Abgas mit der als Referenzgas verwendeten Außenluft.

In der Meßkammer 30 ist ein Meßelement 10 angeordnet, welches auf Schadstoffkomponenten wie CO, $NO_x$ oder HC reagiert. Im vorliegenden Ausführungsbeispiel ist als Meßelement 10 ein Halbleitergassensor eingesetzt. Der Halbleitergassensor besitzt zwei Meßelektroden 13 und 14, über die eine halbleitende Metalloxidschicht 12 gelegt ist. Als Metalloxidschicht ist im vorliegenden Ausführungsbeispiel zur CO-Bestimmung $SnO_2$ eingesetzt. Das Meßelement 10 wird dabei im Diffusionskanal 23 auf die Oberfläche des unteren Keramikträgerteils 21 aufgesetzt. Die porösen Formkörper 28 und 29 dienen gleichzeitig als Schutzschicht für die Metalloxidschicht 12 und verhindern eine Konvektion im Diffusionskanal 23.

Die referenzgasseitige Öffnung 25 ist beispielsweise mit einem Oxidationskatalysator 31 verschlossen. Der Oxidationskatalysator 31 dient dazu, daß bei einer erhöhten CO-Konzentration in der Außenluft das CO mit dem im Überschuß vorhandenen Luftsauerstoff oxidiert wird. Die CO-Konzentration wird dadurch auf der Referenzgasseite des Diffusionskanals 23 auf vernachlässigbare Werte vermindert. Die Sauerstoffkonzentration bleibt jedoch in erster Näherung konstant.

Infolge der Konzentrationsverhältnisse von beispielsweise CO und $O_2$ im Abgas (XCO = 100 bis 8000 ppm, $XO_2$ < 1 %) und in der Außenluft (XCO vernachlässigbar, $XO_2$ = 20 bis 21 %) diffundiert der Sauerstoff von der referenzgasseitigen Öffnung 25 zur abgasseitigen Öffnung 24 und CO von der abgasseitigen Öffnung 24 zur referenzgasseitigen Öffnung 25, wodurch sich entgegengesetzt gerichtete Konzentrationsgradienten von CO und Sauerstoff im Diffusionskanal 23 einstellen (Figur 2). Hierdurch wird erreicht, daß in der Meßkammer 30 am Ort des Meßelements 10 eine genügend hohe Sauerstoffkonzentration vorhanden ist und die CO-Konzentration sich proportional der CO-Konzentration im Abgas verhält.

Für den Partialdruck der reduzierenden Komponente, zum Beispiel CO am Ort s des Meßelements 10 in Bezug auf die Länge 1 des Diffusionskanals 23 gilt:

$$p\,CO\,(s) = (1\text{-}s/1)\,p\,CO$$

Damit ist gewährleistet, daß das Meßelement 10 immer einem näherungsweise konstanten Sauerstoffpartialdruck ausgesetzt ist. Aus dem Partialdruck von CO am Ort des Meßelements 10 kann auf den Partialdruck von CO im Abgas rückgerechnet werden.

Die Sensoranordnung hat insbesondere den Vorteil, daß keine extrem engen Toleranzen bei der Dimensionierung des Diffusionskanals 23 beachtet werden müssen. Die Dimensionierung des Diffusionskanals 23 muß lediglich so bemessen sein, daß im Meßraum 30 der Sauerstoffpartialdruck 0,5 bis 20 % beträgt.

Beim vorliegenden Ausführungsbeispiel ist im unteren Keramikträgerteil 21 ein Heizer 33 integriert. Es ist aber genauso denkbar, den Keramikträger 20 aus beispielsweise Zirkonoxid herzustellen. Dabei ist es jedoch erforderlich, für das Meßelement 10 eine Isolationsschicht zwischen Keramikträger 20 einerseits und den Meßelektroden 13, 14 und der Metalloxidschicht 12 andererseits vorzusehen. Außerdem ist dann der Heizer 33 in eine Isolierung einzubetten.

Die Sensoranordnung wird vorteilhafterweise in Planartechnik durch Bedrucken, Zusammenlaminieren und Sintern entsprechender Folien hergestellt, wobei der Diffusionskanal 23 beispielsweise durch Aufdrucken einer Beschichtungsmasse entsteht, die beim Sintern rückstandslos zersetzt, verdampft oder verbrannt wird. Es ist auch denkbar, den Diffusionskanal durch Fräsen oder Stanzen einer Folie herzustellen. Die Diffusionskörper 28, 29 werden beispielsweise durch Einbringen von Füllungen aus porös sinternden keramischen Materialien erzeugt, z. B. auf $Al_2O_3$- oder $ZrO_2$-Basis. In den Diffusionskanal 23 wird ferner das Meßelement 10 gedruckt. Ein Beispiel für die Herstellung eines Halbleitergassensors in Planartechnik ist in der DE-OS 29 08 916 beschrieben.

Für die Funktionsweise ist die prinzipielle Ausbildung des Diffusionskanals unerheblich. Es ist ebenso denkbar, die beiden Diffusionsstrecken 26, 27 durch Bohrungen beispielsweise in einem Metallblock zu realisieren und einen konventionell aufgebauten Gassensor in einer Kammer darin unterzubringen.

Der Einsatz eines Heizers zum Einstellen einer entsprechenden Betriebstemperatur ist vom verwendeten Meßelement abhängig. Zudem ist es ausreichend, wenn der Heizer nur am Ort des Meßelements in die Sensoranordnung integriert ist.

## Patentansprüche

1. Sensoranordnung zur Bestimmug von Gaskomponenten und/oder Gaskonzentrationen von Gasgemischen, insbesondere von CO, $NO_x$, HC in Abgasen von Verbrennungsmotoren, mit einem einen sensitiven Bereich aufweisenden Meßelement, dadurch gekennzeichnet, daß der sensitive Bereich des Meßelements (10) in einem Diffusionskanal (23) angeordnet ist, welcher mit einer abgasseitigen Öffnung (24) dem Gasgemisch und mit einer referenzgasseitigen Öffnung (25) einem Referenzgas ausgesetzt ist, und daß der Sauerstoffpartialdruck im Referenzgas größer als im Gasgemisch ist, so daß am sensitiven Bereich des Meßelements (10) ein Sauerstoffüberschuß anliegt.

2. Sensoranordnung nach Anspruch 1, dadurch gekennzeichnet, daß das Meßelement ein an sich bekannter Halbleitergassensor mit einer halbleitenden Metalloxidschicht (12) und mit an den Grenzflächen angeordneten Meßelektroden (13, 14) ist.

3. Sensoranordnung nach Anspruch 2, dadurch gekennzeichnet, daß die Metalloxidschicht (12) aus $SnO_2$ besteht.

4. Sensoranordnung nach Anspruch 1, dadurch gekennzeichnet, daß der Diffusionskanal (23) eine abgasseitige Diffusionsstrecke (26) und eine referenzgasseitige Diffusionsstrecke (27) aufweist, daß in die abgasseitige Diffusionsstrecke (26) ein poröser abgasseitiger Diffusionskörper (28) und in die referenzgasseitige Diffusionsstrecke (27) ein poröser referenzgasseitiger Diffusionskörper (29) eingebracht ist, und daß zwischen den beiden Diffusinskörpern (28, 29) eine Meßkammer (30) ausgebildet ist, in der das Meßelement (10) angeordnet ist.

5. Sensoranordnung nach Anspruch 4, dadurch gekennzeichnet, daß sich in der referenzgasseitigen Diffusionsstrecke (26) ein Oxidationskatalysator (31) befindet, welcher geeignet ist, im Referenzgas vorhandene Schadstoffkomponenten zu oxidieren.

6. Sensoranordnung nach Anspruch 5, dadurch gekennzeichnet, daß der Oxidationskatalysator (31) in der referenzgasseitigen Öffnung (25) angeordnet ist.

7. Sensoranordnung nach Anspruch 1, dadurch gekennzeichnet, daß ein Keramikträger (20) vorgesehen ist, in dem der Diffusionskanal (23) eingearbeitet ist, und daß das Meßelement (10) auf eine Fläche im Diffusionskanal (23) in an sich bekannter Weise aufgedruckt ist.

8. Sensoranordnung nach Anspruch 7, dadurch gekennzeichnet, daß der Keramikträger (20) aus $Al_2O_3$ besteht.

9. Sensoranordnung nach Anspruch 7, dadurch gekennzeichnet, daß der Keramikträger (20) aus $ZrO_2$ besteht, und daß das Meßelement (10) mit einer Isolationsschicht auf die Fläche des Diffusionskanals (23) aufgedruckt ist.

10. Sensoranordnung nach einem der vorhergehenden Ansprüche, dadurch gekennzeichnet, daß im Keramikträger (20) ein Heizer (33) elektrisch isoliert integriert ist.

**Claims**

1. Sensor arrangement for determining gas components and/or gas concentrations of gas mixtures, especially of CO, $NO_x$, HC in exhaust gases of internal-combustion engines, with a measuring element having a sensitive zone, characterized in that the sensitive zone of the measuring element (10) is arranged in a diffusion duct (23) which, via an exhaust gas-side orifice (24), is exposed to the gas mixture and, via a reference gas-side orifice (25), is exposed to a reference gas, and in that the oxygen partial pressure in the reference gas is higher than in the gas mixture, so that in the sensitive zone of the measuring element (10) oxygen is present in excess.

2. Sensor arrangement according to Claim 1, characterized in that the measuring element is a semiconductor gas sensor known per se having a semiconducting metal oxide layer (12) and having measuring electrodes (13, 14) arranged on the interfaces.

3. Sensor arrangement according to Claim 2, characterized in that the metal oxide layer (12) is composed of $SnO_2$.

4. Sensor arrangement according to Claim 1, characterized in that the diffusion duct (23) has an exhaust gas-side diffusion section (26) and a reference gas-side diffusion section (27), in that the exhaust gas-side diffusion section (26) has inserted therein a porous exhaust gas-side diffusion body (28), and the reference gas-side diffusion section (27), has inserted therein a porous reference gas-side diffusion body (29), and in that there is formed, between the two diffusion bodies (28, 29), a measuring chamber (30) in which the measuring element (10) is arranged.

5. Sensor arrangement according to Claim 4, characterized in that there is located, in the reference gas-side diffusion section (26), an oxidation catalyst (31) which is suitable for oxidizing pollutant components present in the reference gas.

6. Sensor arrangement according to Claim 5, characterized in that the oxidation catalyst (31) is disposed in the reference gas-side orifice (25).

7. Sensor arrangement according to Claim 1, characterized in that a ceramic support (20) is provided, recessed in which there is the diffusion duct (23), and in that the measuring element (10) is printed on a face in the diffusion duct (23) in a manner known per se.

8. Sensor arrangement according to Claim 7, characterized in that the ceramic support (20) is composed of $Al_2O_3$.

9. Sensor arrangement according to Claim 7, characterized in that the ceramic support (20) is composed of $ZrO_2$, and in that the measuring element (10) is printed, with an insulation layer, onto the face of the diffusion duct (23).

10. Sensor arrangement according to any one of the preceding claims, characterized in that the ceramic support (20) has a heater (33) integrated therein in an electrically insulating manner.

**Revendications**

1. Dispositif de détection destiné à déterminer des composants gazeux et/ou des concentrations de gaz de mélanges gazeux, en particulier de CO, $NO_X$, HC dans des gaz d'échappement de moteurs à combustion interne, se composant d'un élément de mesure comportant une zone sensitive, caractérisé en ce que

• la zone sensitive de l'élément de mesure (10) est placée dans un canal de diffusion (23), qui est exposé par une ouverture (24) du côté du gaz d'échappement au mélange gazeux et par une ouverture (25) du côté du gaz de référence à un gaz de référence, et

- la pression partielle d'oxygène est plus grande dans le gaz de référence que dans le mélange gazeux, de sorte qu'un excès d'oxygène adhère à la zone sensitive de l'élément de mesure (10).

2. Dispositif de détection selon la revendication 1, caractérisé en ce que
l'élément de mesure est un détecteur de gaz semi-conducteur connu en soi avec une couche d'oxyde métallique semiconductrice (12) et avec des électrodes de mesure (13, 14) disposées sur les surfaces extérieures.

3. Dispositif de détection selon la revendication 2, caractérisé en ce que
la couche d'oxyde métallique (12) est composée de $SnO_2$.

4. Dispositif de détection selon la revendication 1, caractérisé en ce que

- le canal de diffusion (23) comporte un chemin de diffusion (26) du côté gaz d'échappement et un chemin de diffusion (27) du côté du gaz de référence,
- dans le chemin de diffusion (26) du côté du gaz d'échappement est inséré un corps de diffusion (28) poreux du côté du gaz d'échappement et dans le chemin de diffusion (27) du côté du gaz de référence un corps de diffusion (29) poreux du côté du gaz de référence, et
- entre les deux corps de diffusion (28, 29) est réalisée une chambre de mesure (30), dans laquelle est disposé l'élément de mesure (10).

5. Dispositif de détection selon la revendication 4, caractérisé en ce qu'
il se trouve dans le chemin de diffusion (26) du côté du gaz de référence un catalyseur d'oxydation (31), qui est approprié, à oxyder les composants présents dans le gaz de référence.

6. Dispositif de détection selon la revendication 5, caractérisé en ce que
le catalyseur d'oxydation (31) est placé dans l'ouverture (25) du côté du gaz de référence.

7. Dispositif de détection selon la revendication 1, caractérisé en ce qu'

- un support de céramique (20) est prévu, dans lequel le canal de diffusion (23) est inséré, et
- l'élément de mesure (10) est appliqué sur une surface dans le canal de diffusion (23) d'une manière connue en soi.

8. Dispositif de détection selon la revendication 7, caractérisé en ce que
le support de céramique (20) est composé d'$Al_2O_3$.

9. Dispositif de détection selon la revendication 7, caractérisé en ce que

- le support de céramique (20) est composé de $ZrO_2$, et
- l'élément de mesure (10) avec une couche d'isolation est appuyé sur la surface du canal de diffusion (23).

10. Dispositif de détection selon les revendications précédentes, caractérisé en ce que
dans le support de céramique (20) est intégré un dispositif de chauffage (33) isolé électriquement.

# FIG. 1

# FIG. 2